# EUROPEAN PATENT APPLICATION

(11) **EP 4 817 935 A1**
(43) Date of publication of application: **07.10.2026**
(21) Application number: 25214143.7
(22) Date of filing: 07.11.2025
(51) Int. Cl.: B60L 50/51, H02K 1/22, H02K 1/27, H02K 11/00, H02K 11/042, H02K 11/049, H02K 11/33, H02K 19/10, H02K 19/12, H02K 21/04, H02P 9/30, H02P 25/022

(54) **WIRELESS EXCITER SYSTEM, A MOTOR AND A MOBILITY DEVICE COMPRISING THE MOTOR**

(30) Priority: 31.03.2025 KR 20250041311
(71) Applicant: Hyundai Motor Company, Seoul 06797 (KR); Kia Corporation, Seoul 06797 (KR); Chalmers University of Technology, 412 96 Göteborg (SE)
(72) Inventor: JANG, Hyung Kwan, Hwaseong-si, Gyeonggi-do (KR); MIN, Byung Ho, Hwaseong-si, Gyeonggi-do (KR); LIU, YUJING, Gothenburg (SE)
(74) Representative: Isarpatent

(57) **Abstract**

A wireless exciter system includes a primary structure including a first converter and a primary coil and a secondary structure including a secondary coil, a second converter, and an inverter. The primary coil and the secondary coil are configured to operate as a transformer. One of the primary structure or the secondary structure is configured to rotate. The primary structure is connected to a direct current (DC) power source to receive power. The secondary structure is electrically connected to a rotor of a motor to output multi-phase alternating current (AC) power to the motor.

## Description

### BACKGROUND

### 1. TECHNICAL FIELD

The present disclosure relates to a wireless excitation system, a motor, and a mobility device including the same.

### 2. DESCRIPTION OF RELATED ART

In general, a motor (an electric motor) may be classified as a direct current (DC) motor or an alternating current (AC) motor, depending on a power source used therefor. Such an AC motor may be classified as a synchronous motor or an induction motor depending on structures thereof. A synchronous motor has high efficiency and is easy to control, but is difficult to manufacture and relatively high in price. An induction motor has been widely used because it has a simple structure, is resistant to external shocks, and is inexpensive.

Recently, as research and development of electric vehicles have accelerated, demand for an electric motor has also increased significantly. The electric motor used as a driving source for an electric vehicle is usually a high-speed and high-power motor.

A mobility device, including a hybrid electric vehicle, an aerial mobility device, or the like, may be partially or entirely driven by a motor, rather than by existing internal combustion engines. As a motor for such a mobility device, a wound field synchronous motor (WFSM) or a permanent magnet synchronous motor (PMSM) to which a permanent magnet is applied, or the like, may be used. Some types of motors may require a brush for excitation.

The statements in this Background section merely provide background information related to the present disclosure and do not necessarily constitute prior art.

### SUMMARY

Aspects of the present disclosure provide a wireless exciter system, a motor, and a mobility device including the same, that enable stable operation of a motor even at high-speed rotation by wirelessly supplying multi-phase AC power.

Aspects of the present disclosure provide a wireless exciter system, a motor, and a mobility device including the same, that can ensure vacuum performance and cooling performance of a cooling system by generating a multi-phase rotating magnetic field through a wireless exciter system for wireless power supply.

According to aspects of the present disclosure, a wireless exciter system, a motor, and a mobility device including the same are provided.

According to an aspect of the present disclosure, a wireless exciter system is provided. The wireless exciter system includes a primary structure including a first converter and a primary coil, and a secondary structure including a second converter, a secondary coil, and an inverter. The primary coil and the secondary coil are configured to operate as a transformer. One of the primary structure or the secondary structure is installed to rotate. The primary structure is connected to a direct current (DC) power source to receive power. The secondary structure is electrically connected to a rotor of a motor to output multi-phase alternating current (AC) power to the motor.

According to another aspect of the present disclosure, a motor is provided. The motor includes a stator configured to output magnetic flux, a rotor configured to output magnetic flux to rotate by the magnetic flux of the stator, a primary structure including a first converter and a primary coil, and connected to a DC power source, and a secondary structure including a secondary coil, a second converter, and an inverter. The primary coil is fixedly installed on the stator. The secondary coil is installed to rotate together with the rotor. The primary coil and the secondary coil are magnetically coupled.

According to yet another aspect of the present disclosure, a mobility device is provided. The mobility device includes a body, at least one driving device provided in the body, a battery provided in the body, and a motor connected to the battery, and providing driving force to the at least one driving device. The motor includes a stator configured to output magnetic flux, a rotor configured to output magnetic flux to rotate by the magnetic flux of the stator, a primary structure including a first converter and a primary coil, and connected to a DC power source, and a secondary structure including a secondary coil, a second converter, and an inverter. The primary coil is fixedly installed on the stator. The secondary coil is installed to rotate with the rotor. The primary coil and the secondary coil are magnetically coupled.

### BRIEF DESCRIPTION OF DRAWINGS

The above and other aspects, features, and advantages of the present disclosure should be more clearly understood from the following detailed description, taken in conjunction with the accompanying drawings, in which:
FIG. 1 illustrates a motor according to an embodiment of the present disclosure;
FIG. 2 is a block diagram of a wireless exciter system according to an embodiment of the present disclosure;
FIG. 3 is a block diagram of a motor according to an embodiment of the present disclosure;
FIG. 4 is an equivalent circuit diagram of a motor according to an embodiment of the present disclosure;
FIG. 5A is a cross-sectional perspective view of a wireless exciter system according to an embodiment of the present disclosure;
FIG. 5B is a cross-sectional view of a wireless exciter system according to an embodiment of the present disclosure;
FIG. 6 is a cross-sectional view of a wireless exciter system according to another embodiment of the present disclosure;
FIG. 7 schematically illustrates a cross-section of a motor according to an embodiment of the present disclosure;
FIG. 8 schematically illustrates a cross-section of a motor according to an embodiment of the present disclosure;
FIG. 9 is a cross-sectional view of a wireless exciter system according to an embodiment of the present disclosure;
FIG. 10 is a perspective view illustrating a mobility device including a motor according to an embodiment of the present disclosure;
FIG. 11A is a perspective view illustrating a mobility device including a motor according to an embodiment of the present disclosure; and
FIG. 11B is a perspective view illustrating a mobility device including a motor according to an embodiment of the present disclosure.

### DETAILED DESCRIPTION

Hereinafter, embodiments of the present disclosure are described in detail with reference to the accompanying drawings. The detailed descriptions that follow are provided to facilitate a comprehensive understanding of the methods, devices and/or systems described herein. However, this is merely an example and the present disclosure is not limited thereto.

In describing the embodiments of the present disclosure, where it was determined that a detailed description of the known technology related to the present disclosure would unnecessarily obscure the gist of the present disclosure, the detailed description thereof has been omitted. In addition, terms used in the present disclosure are terms defined in consideration of functions in the present disclosure, which may vary according to the intention or custom of a user or operator. Therefore, the definition should be made based on the contents throughout this specification. The terminology used in the detailed description is only for describing the embodiments of the present disclosure and is no way limiting. Unless expressly used otherwise, singular forms of expression include plural forms.

In the present disclosure, expressions such as "including" or "comprising" are intended to indicate any characteristic, number, step, operation, element, portion or combination thereof, one or more other than those described, and it should not be construed to exclude the existence or possibility of any other feature, number, step, operation, element, part or a combination thereof.

The terms such as "first," "second," and the like, may be used to describe various components, but the components are be limited by the terms. These terms are only used for the purpose of distinguishing one component from another component. For example, a first element may be termed a second element, and similarly, a second element may be termed a first element, without departing from the scope of the present disclosure. The term 'and/or' includes a combination of a plurality of related recited items or any one of a plurality of related recited items.

The terms, such as "unit," "part," "portion," etc., may be used to describe various components, but the components are not limited by these terms. These terms may refer to not only physically/visually distinct components, but also to functions or components of a portion even if the corresponding portion is not clearly divided.

Unless defined herein in a different way, all the terms used herein including technical and scientific terms have the same meanings as understood by those having ordinary skill in the art to which the present disclosure pertains. Such terms as defined in generally used dictionaries should be construed to have the same meanings as those of the contexts of the related art, and should not be construed to have ideally or excessively formal meanings, unless clearly defined in the present disclosure.

When a component, controller, device, element, apparatus, unit or the like of the present disclosure is described as having a purpose or performing an operation, function, or the like, the component, controller, device, element, apparatus, unit or the like should be considered herein as being "configured to" meet that purpose or to perform that operation or function. Each component, controller, device, element, apparatus, unit, or the like may separately embody or be included with one or more processors and a memory, such as a non-transitory computer-readable media, as part of the apparatus. The one or more processors may be configured to implement computer-readable instructions stored in the memory to perform the described operations.

As used herein, a mobility device may move in a space related to the ground, underground, air, space, sea, and/or underwater, depending on the space in which the mobility device moves. A mobility device on the ground or underground may be provided in the form of, for example, vehicles, robots, etc., and a mobility device in the air or space, as aerial mobility devices, may be provided in the form of, for example, typical fixed-wing or rotary-wing aircraft, advanced aerial mobility device (AAM), which has been actively developed recently, unmanned aerial vehicles or drones, rockets, and units of transportation mounted on artificial satellites. A maritime or underwater mobility device may be, for example, a ship, a submarine, or the like. The mobility device is not limited to a specific space and may be a mobile body that may move through all of the aforementioned spaces, that is, a mobile body that may move between multiple spaces, and may be, for example, an amphibious vehicle, a flying vehicle, etc.

In the description below, the terms "anterior," "posterior," "lateral," "front," "rear," "up/down," "above," "upper," "top," "below," "lower," "bottom," "left/right," etc. are defined based on a vehicle or a vehicle body.

In addition, throughout the specification, when a part is said to be 'connected' to another part, the part may be 'directly connected' to the other part, or may be 'indirectly connected' to the other part with one or more other components therebetween.

When a superconducting coil is applied to a rotor of a motor, the rotor may be provided with a cooling system (pipes, refrigerant tank) using an ultra-low temperature refrigerant to cool the superconducting coil.

As the rotor rotates, the cooling system rotates along with the rotor, there is a risk of leakage of a refrigerant. Therefore, the cooling system includes a sealing structure to prevent the leakage of refrigerant. However, there is a risk that the function of preventing the leakage of refrigerant may be lost during high-speed rotation, which may deteriorate the cooling performance and safety of the motor.

In a motor and a wireless exciter system (WES) according to embodiments of the present disclosure, a superconducting coil and a cooling system are fixed, providing stable operation of the motor.

According to embodiments of the present disclosure, vacuum performance and cooling performance of the cooling system may be ensured by generating a multi-phase rotating magnetic field through a wireless exciter system for wireless power supply.

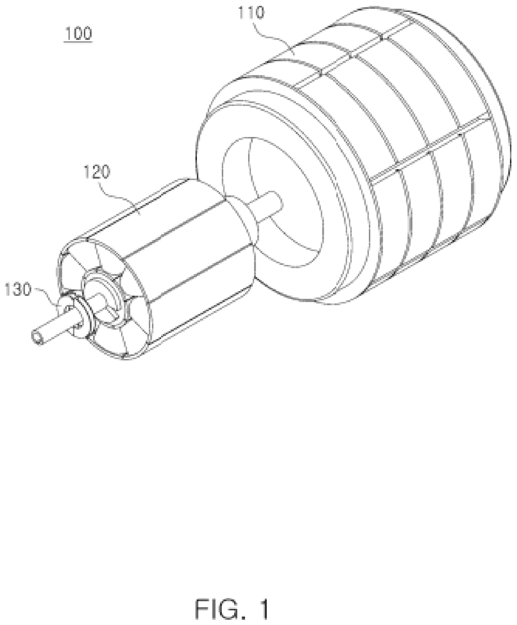

FIG. 1 illustrates a motor according to an embodiment of the present disclosure. Referring to FIG. 1, a motor 100 may include a rotor 110, a stator 120, and a wireless exciter system 130.

In an example, the motor 100 may be a superconducting motor, but the present disclosure is not limited thereto.

The rotor 110 and the stator 120 may output magnetic flux, respectively.

The rotor 110 may include a rotor body, a rotating shaft, and a rotor coil. The rotor 110 may output magnetic flux based on a current flowing in the rotor coil.

The stator 120 may include a stator body and a stator coil. The stator 120 may output magnetic flux based on a current flowing in the stator coil.

The rotor 110 may output magnetic flux to rotate by the magnetic flux of the stator 120. The magnetic flux of the rotor 110 and the magnetic flux of the stator 120 may interact electromagnetically.

Force resulting from the interaction between the magnetic flux of the rotor 110 and the magnetic flux of the stator 120 may be applied to the rotor 110, and may act as rotational force rotating the rotor 110 around the rotating shaft.

The rotor 110 and the stator 120 may have a cylindrical shape or another suitable shape. The rotor 110 and the stator 120 may have a structure in which one surrounds the other.

FIG. 1 illustrates a structure of a motor in which the rotor 110 is disposed to surround the stator 120, and the stator 120 is disposed in an internal space of the rotor 110. However, depending on the design, a structure in which a stator is disposed to surround a rotor, and a rotor is disposed in an internal space of a stator, may be provided.

The rotor 110 may rotate while receiving a current to output magnetic flux.

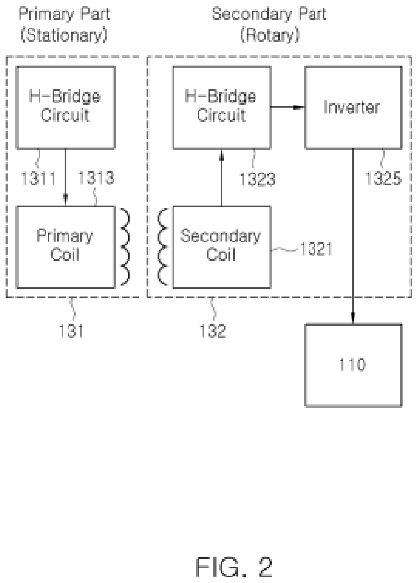

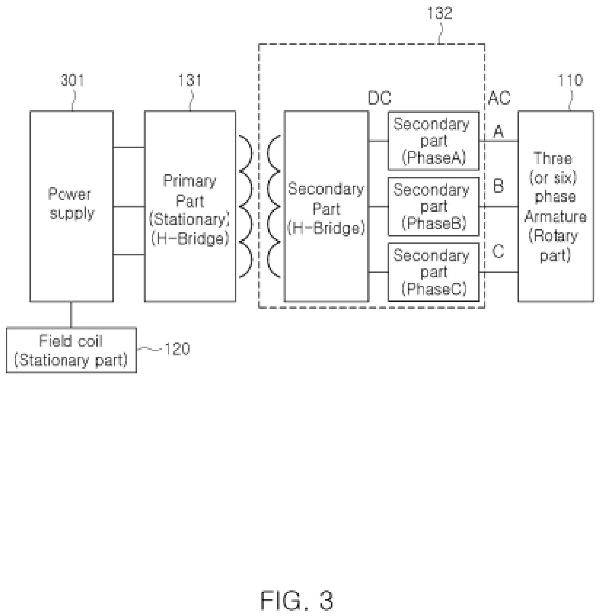

FIG. 2 is a block diagram of a wireless exciter system 130, according to an embodiment of the present disclosure. FIG. 3 is a block diagram illustrating some configurations of a motor and the wireless exciter system 130, according to an embodiment of the present disclosure.

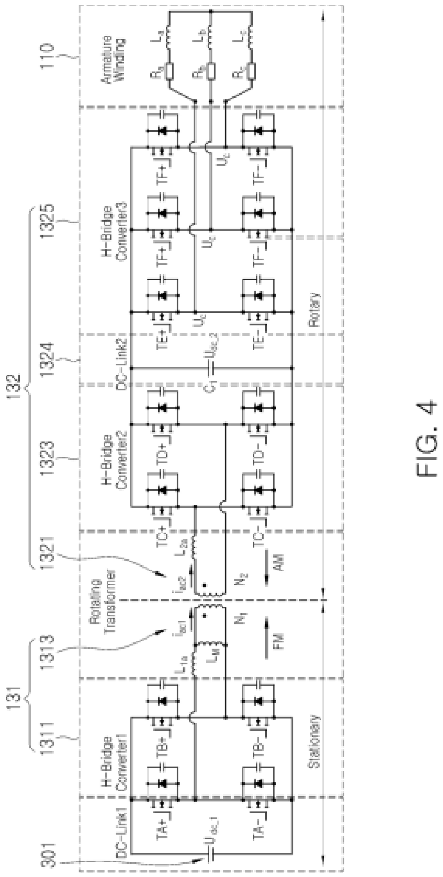

FIG. 4 is an equivalent circuit diagram of some configurations of a motor and the wireless exciter system 130, according to an embodiment of the present disclosure.

Referring to FIGS. 2 - 4, the wireless exciter system 130 may include a primary part (also sometimes referred to herein as "primary structure") 131 and a secondary part (also sometimes referred to herein as "secondary structure") 132.

One of the primary part 131 or the secondary part 132 may be installed to rotate.

In an embodiment, the primary part 131 may be fixedly installed, and the secondary part 132 may be installed to rotate.

In another embodiment, the primary part 131 may be installed to be rotatable, and the secondary part 132 may be fixedly installed.

The primary part 131 may include a first converter 1311 and a primary coil 1313.

The primary part 131 may be connected to a direct current (DC) power source and receive power. For example, the first converter 1311 may be connected to a DC power source and receive first DC power.

The first converter 1311 may convert the first DC power to alternating current (AC) power. The first converter 1311 may transmit the converted AC power to the primary coil 1313.

For example, the first converter 1311 may include an H-bridge structure in which a plurality of switching elements are connected in an H shape. Referring to FIG. 4, the first converter 1311 may include an H-bridge structure in which a plurality of switching elements (TA+, TA-, TB+, TB-) are connected in an H shape.

The secondary part 132 may include a secondary coil 1321, a second converter 1323, a DC link 1324, and an inverter 1325.

The primary coil 1313 and the secondary coil 1321 may be disposed to be magnetically coupled. The primary coil 1313 and the secondary coil 1321 may operate as a transformer.

In an embodiment, the primary coil 1313 may be disposed to surround a rotating shaft of the rotor 110 in a winding direction, and the secondary coil 1321 may be disposed to surround the primary coil 1313 in the winding direction with a gap in a circumferential direction therebetween.

In another embodiment, the primary coil 1313 may be disposed to surround a rotating shaft of the rotor 110 in a winding direction, and the secondary coil 1321 may be disposed to surround rotating shaft of the rotor 110 in the winding direction with a gap in a longitudinal direction therebetween.

AC power may be transmitted from the primary part 131 to the secondary part 132 through the magnetic coupling of the primary coil 1313 and the secondary coil 1321.

Even when one of the primary coil 1313 or the secondary coil 1321 rotates, the magnetic coupling between the primary coil 1313 or the secondary coil 1321 may be maintained.

According to an embodiment of the present disclosure, power may be transmitted from a fixed conductive structure (e.g., a primary coil 1313 and a structure connected thereto) to a rotating conductive structure (e.g., a secondary coil 1321 and a structure connected thereto) without a brush requiring mechanical contact. Thus, the disadvantages of brush (e.g. mechanical friction, a decrease in efficiency, a decrease in control characteristics, additional volume/weight requirement, periodic maintenance requirement) may be eliminated.

The second converter 1323 may receive AC power from the secondary coil 1321. The second converter 1323 may convert the received AC power into second DC power. The second converter 1323 may transmit the converted second DC power to the inverter 1325 through a DC link 1324.

For example, the second converter 1323 may include an H-bridge structure in which a plurality of switching elements are connected in an H shape. Referring to FIG. 4, the second converter 1323 may include an H-bridge structure in which a plurality of switching elements (TC+, TC-, TD+, TD-) are connected in an H shape.

The DC link 1324 may include a capacitor disposed between the second converter 1323 and the inverter 1325.

The inverter 1325 may generate multi-phase AC power from the second DC power. The multi-phase AC power may be, for example, one of 3-phase AC power or 6-phase AC power.

For example, the inverter 1325 may include an H-bridge structure in which a plurality of switching elements are connected in an H shape. Referring to FIG. 4, the inverter 1325 may include an H-bridge structure in which a plurality of switching elements (TE+, TE-, TF+, TF-, TG+, TG-) are connected in an H shape.

In an embodiment, the inverter 1325 may output multi-phase AC power to the rotor 110 of the motor 100.

The inverter 1325 may include one or more output terminals outputting multi-phase AC power. For example, the inverter 1325 may include three output terminals outputting 3-phase AC power.

The wireless exciter system 130 may further include a controller. The controller may be fixedly installed on the side of the primary part 131, for example.

The controller may generate a switching control signal and may transmit the switching control signal to the primary part 131 or the secondary part 132.

As illustrated in FIG. 4, each of the first converter 1311, the second converter 1323, and the inverter 1325 may receive direct current power (Vin, Udc) from a battery 301 and may receive a switching control signal from the controller.

For example, each of the first converter 1311, the second converter 1323, and the inverter 1325 may include a plurality of switching elements (TA+, TA-, TB+, TB-, TC+, TC-, TD+, TD-, TE+, TE-, TF+, TF-, TG+, TG-). Each of the plurality of switching elements may be switched on/off based on the switching control signal from the controller.

For example, each of the plurality of switching elements may have a structure in which a power transistor, such as an Insulated Gate Bipolar Transistor (IGBT), and a diode are connected to each other (a capacitor may be further connected).

For example, a plurality of switching elements may be combined in an H-bridge structure. Direct current power sources (Vin, Udc) may be input through four edges of the H-bridge structure. A first alternating current may be output through a central portion (bridge) of the H-bridge structure. The H-bridge structure may be an efficient structure in a wireless power transmission method between the primary coil 1313 and the secondary coil 1321.

For example, the controller may generate the switching control signal based on a pulse width modulation (PWM) method, and control switching timing of a plurality of switching elements to control a pulse width of the PWM method.

For example, the controller may be implemented as at least a portion of a computing system (including a processor, memory, storage, input/output devices, and communication devices), or may be implemented as a microcontroller, an embedded system, a system on chip (SoC), or the like.

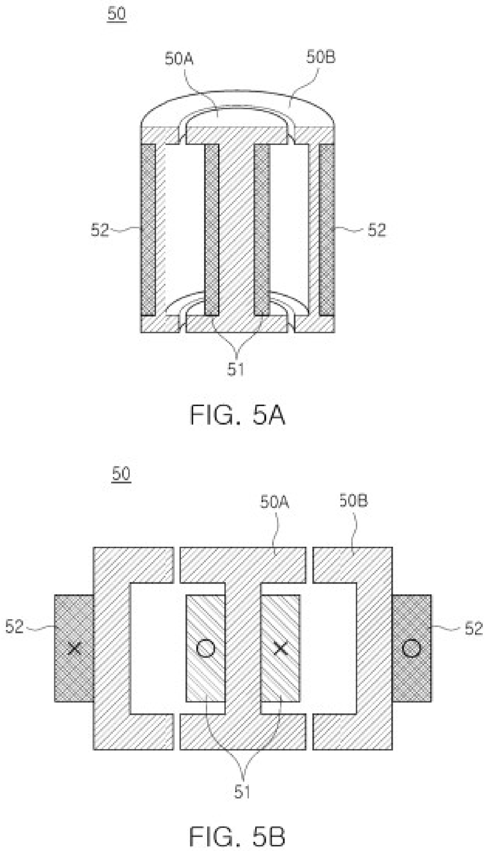

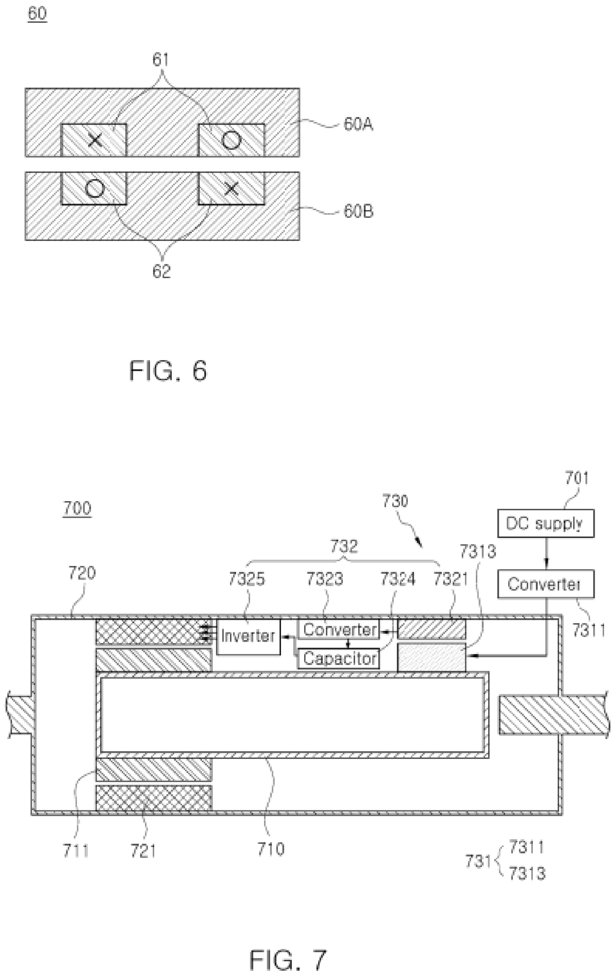

FIGS. 5A, 5B and 6 schematically illustrate a wireless exciter system according to an embodiment of the present disclosure. Referring to FIGS. 5A, 5B and 6, a wireless exciter system 50 may include a primary part (sometimes referred to herein as "primary structure") 50A and a secondary part (sometimes referred to herein as "secondary structure") 50B. The primary part 50A may be fixedly installed, and the secondary part 50B may be installed to be rotatable.

The primary part 50A may include a primary coil 51, and the secondary part 50B may include a secondary coil 52. The primary coil 51 and the secondary coil 52 may be magnetically coupled to each other to transmit power.

For example, power may be transmitted from the primary part 50A to the secondary part 50B, and the secondary part 50B may generate multi-phase AC power and output the same to the motor.

Depending on the design, the primary part 50A may be installed to be rotatable, and the secondary part 50B may be fixedly installed.

FIG. 6 is a cross-sectional view of a wireless exciter system according to another embodiment of the present disclosure. A wireless exciter system 60 illustrated in FIG. 6 may include a primary part (sometimes referred to herein as "primary structure") 60A and a secondary part (sometimes referred to herein as "secondary structure") 60B. One of the primary part 60A and the secondary part 60B may be fixedly installed, and the other thereof may be installed so as to be rotatable.

The primary part 60A may include a primary coil 61, and the secondary part 60B may include a secondary coil 62. The primary coil 61 and the secondary coil 62 may be magnetically coupled to each other to transmit power.

FIG. 7 illustrates a motor to which a wireless exciter system according to an embodiment of the present disclosure is applied.

A motor 700 may include a stator 710, a rotor 720, and a wireless exciter system 730.

The rotor 720 may be installed to surround the stator 710. The wireless exciter system 730 may be installed to surround the stator 710 in a space inside a rotor body of the rotor 720.

The stator 710 may include a stator coil (field coil) 711, and the rotor 720 may include a rotor coil (armature coil) 721.

The wireless exciter system 730 may include a primary part (sometimes referred to herein as "primary structure") 731 and a secondary part (sometimes referred to herein as "secondary structure") 732.

The primary part 731 may be mounted on the stator 710, and may be fixedly installed.

The primary part 731 may include a first converter 7311 and a primary coil 7313. The first converter 7311 may convert DC power received from a DC power source 701 into AC power.

The secondary part 732 may be mounted on the rotor 720 and installed to rotate together with the rotor 720.

The secondary part 732 may include a secondary coil 7321, a second converter 7323, a DC link 7324, and an inverter 7325.

The primary coil 7313 and the secondary coil 7321 may be magnetically coupled to transmit power.

The secondary part 732 may be electrically connected to the rotor coil 721, and may output multi-phase AC power.

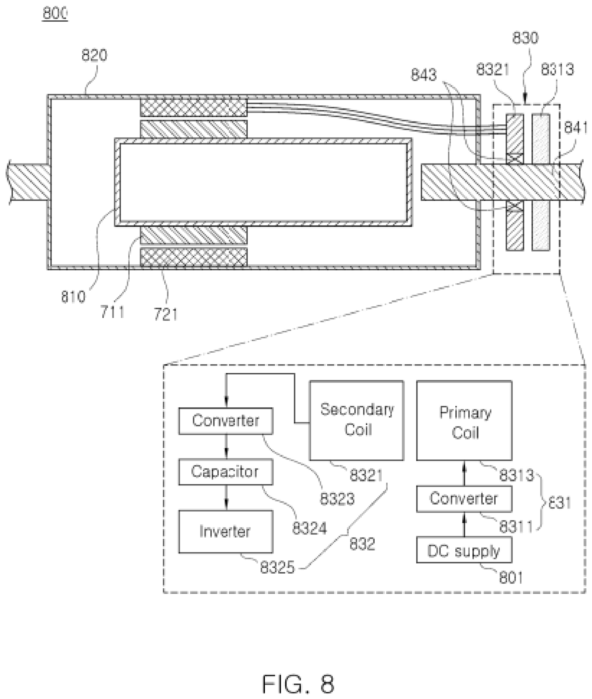

FIG. 8 illustrates a motor to which a wireless exciter system according to another embodiment of the present disclosure is applied.

A motor 800 may include a stator 810, a rotor 820, and a wireless exciter system 830.

The rotor 820 may be installed to surround the stator 810. The wireless exciter system 830 may be installed to surround a bearing support portion 841 supporting a bearing 843 outside a rotor body of the rotor 820.

The stator 810 may include a stator coil 811, and the rotor 820 may include a rotor coil 821.

The wireless exciter system 830 may include a primary part (sometimes referred to herein as "primary structure") 831 and a secondary part (sometimes referred to herein as "secondary structure") 832.

The primary part 831 may be installed to surround a rotation axis of the motor 800. The primary part 831 may be fixedly installed.

The primary part 831 may include a first converter 8311 and a primary coil 8313. The first converter 8311 may convert DC power received from a DC power source 801 into AC power.

The secondary part 832 may be disposed to have a gap in a longitudinal direction of a rotating shaft of the motor 800 between the secondary part 832 and the primary part 831, to surround the rotating shaft of the motor 800 by interposing a bearing 843.

The secondary part 832 may be installed to be rotatable.

The secondary part 832 may include a secondary coil 8321, a second converter 8323, a DC link 8324, and an inverter 8325.

The primary coil 8313 and the secondary coil 8321 may be magnetically coupled to transmit power.

The secondary part 832 may be electrically connected to the rotor coil 821, and may output multi-phase AC power.

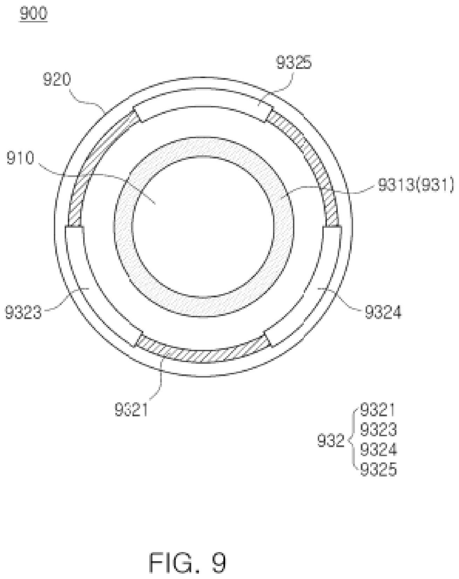

FIG. 9 illustrates a cross-sectional view of a motor to which a wireless exciter system is applied, according to an embodiment of the present disclosure. A motor 900 may include a stator 910 and a rotor 920. The rotor 920 may be installed to surround the stator 910.

A primary coil 9313 of the wireless exciter system may be mounted on the stator 910, and a secondary coil 9321 of the wireless exciter system may be mounted on the rotor 920 and may be installed to rotate together with the rotor 920.

The primary coil 9313 of the wireless exciter system may be installed to surround the stator 910, and the secondary coil 9321 of the wireless exciter system may be installed to surround the primary coil 9313.

A second converter 9323, a DC link 9324, and an inverter 9325 may be disposed on the secondary coil 9321 of the wireless exciter system.

As illustrated in FIG. 9, the second converter 9323, the DC link 9324, and the inverter 9325 may be distributed and disposed in a circumferential direction of the rotor 920 to maintain balance when the secondary coil 9321 rotates.

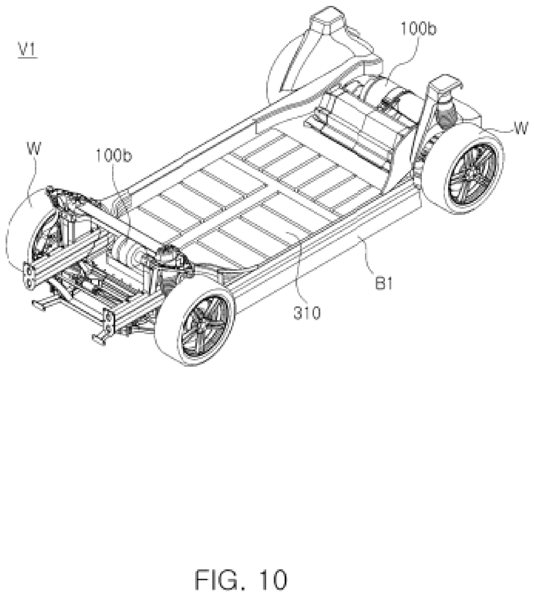

Referring to FIGS. 10. 11A, and 11B, mobility devices (V1 and V2) according to embodiments of the present disclosure may include at least bodies (B1, B2), driving means (W, P) (sometimes referred to herein as "driving device") provided on the bodies (B1, B2), motors (100b, 100c, 100d) of the present embodiment linked to the driving means (W, P), and batteries (E1, E2) providing power to the motor. The motors (100b, 100c, 100d) installed in the mobility devices (V1 and V2) according to embodiments of the present embodiment may be the motors 100 and/or wireless exciter systems described with reference to FIGS. 1 - 9. The motor 100 and/or wireless exciter system described with reference to FIGS. 1 - 9 may be installed, and thus, a detailed description of a structure thereof has been omitted.

Referring to FIG. 10, the mobility device V1 in an embodiment may be a vehicle that may move on the ground. The vehicle V1, which is a mobility device, may include at least a body B1, a wheel W as a driving means or driving device provided in the body B1, a motor 100b linked to the driving means or driving device W, and a battery E1 providing driving force to the motor.

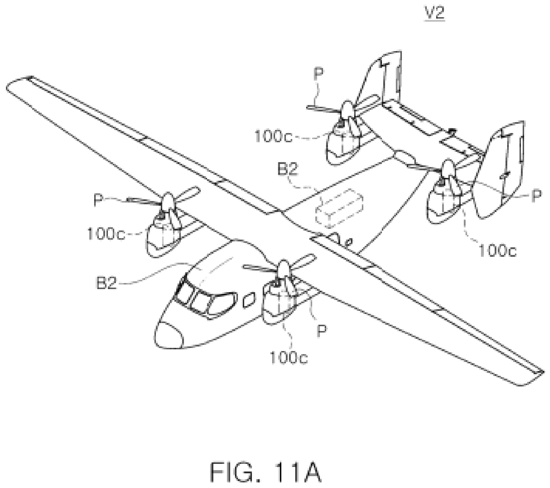

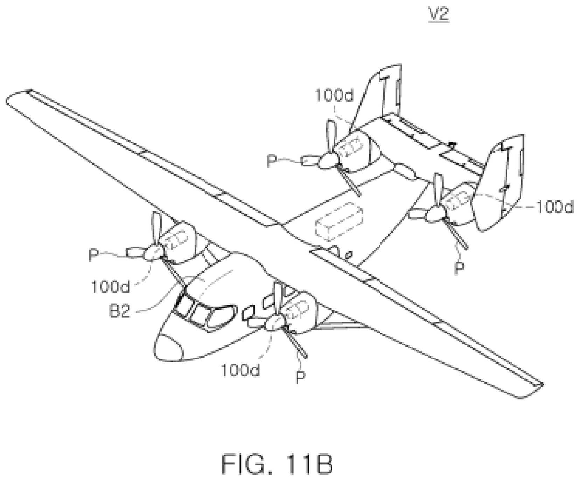

In addition, referring to FIGS. 11A and 11B, the mobility device V2 in an embodiment may be an aerial mobility device that moves in the air. The aerial mobility device V2 in an embodiment may include at least a fuselage B2 as a body, a propulsion body (a propeller P) as a driving means or driving device provided in the fuselage B2, a motor M2 linked to the propulsion body P, and a battery E2 providing driving force to the motor.

FIG. 11A illustrates a position of the propeller P when the aerial mobility device V2 takes off or lands or hovers for turning at a specific point, and FIG. 11B illustrates a position of the propeller P when the aerial mobility device V2 moves in position, that is, drives. In other words, the aerial mobility device V2 may have a structure in which a direction of the propeller P, which is a propulsion body of the aerial mobility device V2, may be tilted, and accordingly, the motor M2 driving the propeller P may also be tilted.

In the case of a hovering mode illustrated in FIG. 11A, a main wing and/or tail wing tilting propeller P may be pivoted to be substantially perpendicular to the fuselage B2, and in the case of a cruise mode illustrated in FIG. 11B, the main wing and/or tail wing non-tilting propulsion body P may be pivoted to be substantially parallel to the fuselage B2. The tilting of the main wing and/or tail wing tilting propulsion body P may be synchronized depending on a flight mode, and tilting of each propeller may be adjusted to be different depending on posture control and flight conditions in the same flight mode.

In some embodiments, although specific illustrations thereof have been omitted, a mobility device may be a device that moves through spaces related to the ground, underground, air, space, sea, and/or underwater, depending on the space in which the mobility device moves. Mobility devices on the ground or underground may be provided in the form of, for example, vehicles, robots, etc., and mobility device s in the air or space, as aerial mobility device s, may be provided in the form of, for example, typical fixed-wing or rotary-wing aircraft, advanced aerial mobility device s (AAMs), which have been actively developed recently, unmanned aerial vehicles or drones, rockets, and units of transportation mounted on artificial satellites. A maritime or underwater mobility device may be, for example, a ship, a submarine, or the like. The mobility device is not limited to a specific space and may be a mobile body that may move through all of the aforementioned spaces, i.e., a mobile body that may move between multiple spaces, and may be, for example, an amphibious vehicle, a flying vehicle, and the like.

As set forth above, embodiments of the present disclosure provide a wireless exciter system, a motor, and a mobility device including the same, that enable stable operation of a motor even at high-speed rotation by wirelessly supplying multi-phase AC power.

Embodiments of the present disclosure provide a wireless exciter system, a motor, and a mobility device including the same, that can ensure vacuum performance and cooling performance of a cooling system by generating a multi-phase rotating magnetic field through a wireless exciter system for wireless power supply.

While example embodiments have been illustrated and described above, it should be apparent to those having ordinary skill in the art that modifications and variations could be made without departing from the scope of the present disclosure as defined by the appended claims.

## Claims

1. A wireless exciter system, comprising:
a primary structure including a first converter and a primary coil; and
a secondary structure including a secondary coil, a second converter, and an inverter,
wherein:
the primary coil and the secondary coil are configured to operate as a transformer,
one of the primary structure or the secondary structure is configured to rotate,
the primary structure is connected to a direct current (DC) power source to receive power, and
the secondary structure is electrically connected to a rotor of a motor to output multi-phase alternating current (AC) power to the motor.

2. The wireless exciter system of claim 1, wherein:
the first converter is configured to
convert first DC power supplied from the DC power source to AC power, and
transmit the AC power to the primary coil, and
wherein the AC power is transmitted from the primary structure to the secondary structure through the primary coil and the secondary coil.

3. The wireless exciter system of claim 1, wherein the second converter is configured to:
convert AC power received from the secondary coil to second DC power; and
transmit the second DC power to the inverter.

4. The wireless exciter system of claim 3, wherein the inverter is configured to:
generate the multi-phase AC power from the second DC power; and
output the multi-phase AC power to a rotor of the motor,
wherein the multi-phase AC power is preferably one of 3-phase AC power or 6-phase AC power.

5. The wireless exciter system of claim 1, wherein the first converter, the second converter, and the inverter respectively include an H-bridge structure in which a plurality of switching elements are connected in an H shape.

6. The wireless exciter system of claim 1, wherein:
the primary structure is mounted on a stator of the motor; and
the secondary structure is mounted on a rotor of the motor so as to rotate together with the rotor,
wherein the secondary coil is preferably arranged to be installed on an outside of the primary coil so as to surround at least a portion of the primary coil.

7. The wireless exciter system of claim 1, wherein:
the primary structure surrounds a rotating shaft of the motor; and
the secondary structure has a gap in a longitudinal direction of the rotating shaft of the motor between the primary structure and the secondary structure, and wherein the secondary structure surrounds the rotating shaft of the motor by interposing a bearing.

8. The wireless exciter system of claim 1, wherein the secondary structure further comprises a DC link including a capacitor disposed between the second converter and the inverter, and
wherein the second converter, the capacitor, and the inverter are preferably distributed and disposed in a circumferential direction of the rotor to maintain balance when the secondary structure rotates.

9. A motor, comprising:
a stator configured to output magnetic flux;
a rotor configured to output magnetic flux to rotate by the magnetic flux of the stator;
a primary structure including a first converter and a primary coil, and connected to a DC power source; and
a secondary structure including a secondary coil, a second converter, and an inverter,
wherein:
the primary coil is fixedly installed on the stator,
the secondary coil is configured to rotate together with the rotor, and
the primary coil and the secondary coil are magnetically coupled.

10. The motor of claim 9, wherein:
the first converter is configured to
convert first direct current (DC) power supplied from the DC power source into AC power, and
transmit the AC power to the primary coil, and
the AC power is transmitted to the secondary structure from the primary structure through the primary coil and the secondary coil.

11. The motor of claim 9, wherein the second converter is configured to:
convert alternating current (AC) power received from the secondary coil into second DC power; and
transmit the second DC power to the inverter.

12. The motor of claim 11, wherein the inverter is configured to:
generate multi-phase AC power from the second DC power; and
output the multi-phase AC power to the rotor,
wherein the multi-phase AC power is preferably one of a 3-phase AC power or a 6-phase AC power.

13. The motor of claim 9, wherein the first converter, the second converter, and the inverter respectively include an H-bridge structure in which a plurality of switching elements are connected in an H shape.

14. The motor of claim 9, wherein the secondary structure further comprises a DC link including a capacitor disposed between the second converter and the inverter, and
wherein the second converter, the capacitor, and the inverter are preferably distributed and disposed in a circumferential direction of the rotor to maintain balance when the secondary structure rotates.

15. A mobility device, comprising:
a body;
at least one driving device provided in the body;
a battery provided in the body; and
a motor connected to the battery, and providing driving force to the at least one driving device,
wherein the motor comprises:
a stator configured to output magnetic flux,
a rotor configured to output magnetic flux to rotate by the magnetic flux of the stator,
a primary structure including a first converter and a primary coil, and connected to a DC power source, and
a secondary structure including a secondary coil, a second converter, and an inverter,
wherein:
the primary coil is fixedly installed on the stator,
the secondary coil is configured to rotate together with the rotor, and
the primary coil and the secondary coil are magnetically coupled.
